# EUROPÄISCHE PATENTSCHRIFT

(11) **EP 3 523 839 B1**
(45) Veröffentlichungstag und Bekanntmachung des Hinweises auf die Patenterteilung: **02.03.2022**
(21) Anmeldenummer: 17767769.7
(22) Anmeldetag: 05.09.2017
(51) Int. Cl.: H01M 50/20, H01M 10/613, H01M 10/6557

(54) **ENERGIEZELLENHALTEVORRICHTUNG FÜR EIN KRAFTFAHRZEUG**
BATTERY CELL HOLDING DEVICE FOR AN AUTOMOBILE
DISPOSITIF DE SUPPORT DE CELLULE DE BATTERIE POUR UNE AUTOMOBILE

(30) Priorität: 05.10.2016 DE 102016219302
(43) Veröffentlichungstag der Anmeldung: 14.08.2019
(73) Patentinhaber: Vitesco Technologies GmbH, 93055 Regensburg (DE)
(72) Erfinder: OCHS, Markus, 60487 Frankfurt / Main (DE); STROBEL, Henry, 65843 Sulzbach (DE); SCHWEIZER-BERBERICH, Paul-Markus, 10625 Berlin (DE)
(74) Vertreter: Vitesco Technologies
(86) Internationale Anmeldenummer: PCT/EP2017/072263
(87) Internationale Veröffentlichungsnummer: WO 2018/065161

(56) Entgegenhaltungen:
- CN-A- 104 253 289
- DE-A1-102013 112 395
- JP-A- 2000 100 413
- US-A1- 2010 105 239

## Beschreibung

### Technisches Gebiet

Die vorliegende Erfindung betrifft Energiezellenmodule für Kraftfahrzeuge.

### Technischer Hintergrund

Die DE 10 2014 216811 A1 beschreibt ein Batteriemodulsystem umfassend ein Gehäuse zur Aufnahme von mindestens zwei Batteriemodulen, wobei das Gehäuse an einer Innenseite Verbindungselemente aufweist zur Aufnahme von Verbindungselementen der Batteriemodule, um die Batteriemodule im Gehäuse zu fixieren, wobei die Batteriemodule jeweils eine Endplatte aufweisen auf dem die Verbindungselemente der Batteriemodule angeordnet sind. Die US 2010 / 0 105 239 A1 und die CN 104 253 289 A beschreiben jeweils eine Batterieverbindungseinrichtung zur Verbindung zweier Batterien in Längsrichtung zueinander. Die jeweilige Verbindungseinrichtung weist eine Verbindungsplatte auf, die entweder eine Kontaktierungseinrichtung aufweist oder in die eine Kontaktierungseinrichtung eingeführt werden kann.

In der DE 10 2013 112 395 A1 ist eine Batterieeinheit beschrieben, wobei die Batterieeinheit eine Mehrzahl von Batterieeinzelzellen aufweist. Die Batterieeinzelzellen sind in einem Gehäuse angeordnet und können die Kontaktierungspole auf einer Seite der Batterieeinzelzellen aufweisen.

### Zusammenfassung der Erfindung

Es ist eine Aufgabe der vorliegenden Erfindung, einen Zellmodulaufbau für eine einfache Kontaktierung und Fixierung der Batteriezellen für eine effektive Kühlung der Batteriezellen anzugeben.

Diese Aufgabe wird durch die Gegenstand des unabhängigen Patentanspruchs gelöst. Ausführungsformen und Weiterbildungen sind den abhängigen Patentansprüchen, der Beschreibung und den Figuren der Zeichnungen zu entnehmen.

Ein Aspekt der vorliegenden Erfindung betrifft einen Zellmodulaufbau für ein Kraftfahrzeug, wobei der Zellmodulaufbau mindestens eine Energiezelle und eine Energiezellenhaltevorrichtung aufweist, wobei die Energiezellenhaltevorrichtung umfasst: eine Kontaktplatte, welche mindestens eine Ausnehmung und mindestens einen Überhang aufweist; wobei die Ausnehmung und der Überhang dazu ausgebildet sind, die Energiezelle mit der Kontaktplatte über eine Mantelfläche der Energiezelle formschlüssig und/oder kraftschlüssig und/oder materialschlüssig zu fixieren; und wobei die Ausnehmung und der Überhang dazu ausgebildet sind, mindestens einen elektrischen Anschluss der Energiezelle über die Mantelfläche der Energiezelle zu kontaktieren.

Erfindungsgemäß ist vorgesehen, dass die Energiezelle als einen ersten elektrischen Kontakt einen Kontakt an einer Stirnseite der Energiezelle aufweist und als einen zweiten elektrischen Kontakt einen Kontakt an einer Mantelfläche aufweist, wobei der zweite elektrische Kontakt innerhalb eines Halbseitenbereichs angeordnet ist und innerhalb des Halbseitenbereiches ferner der erste elektrische Kontakt angeordnet ist. Dabei bezeichnen der erste und der zweite elektrische Kontakt beispielsweise den Minus- und den Pluspol der Energiezelle.

Dieses Anordnung ermöglicht vorteilhaft eine Trennung zwischen elektrischer Kontaktierung der Energiezelle in einem Halbseitenbereich der Energiezelle und der Kühlung der Energiezelle in einem anderen Halbseitenbereich der Energiezelle.

Mit anderen Worten ausgedrückt, die Energiezelle wird mit der Kontaktplatte über eine Mantelfläche der Energiezelle:
i) formschlüssig und kraftschlüssig per Verpressen; und/oder
ii) materialschlüssig per Kleb-, Löt- oder Schweißverfahren gekoppelt bzw. arretiert oder fixiert.

Mit anderen Worten ausgedrückt, die Energiezelle wird mit der Kontaktplatte über eine Mantelfläche der Energiezelle:
i) formschlüssig und kraftschlüssig; und/oder
ii) materialschlüssig
fixiert. Die Energiezelle wird mit der Kontaktplatte entlang der Mantelfläche der Energiezelle mechanisch verbunden.

Mit anderen Worten ausgedrückt, die vorliegende Erfindung ermöglicht vorteilhaft eine Methode zur Kontaktierung von Batterie-Rundzellen mit gleichzeitiger Modulabdichtung bereitzustellen.

Mit anderen Worten ausgedrückt, in einer Ausführungsform der vorliegenden Erfindung, kann eine metallische, elektrisch leitende, Platte vorgesehen sein, welche über einen beispielsweise durch Ausstanzen erzeugten Überhang am Rand einer runden bzw. an die Geometrie der zylindrischen Energiezelle angepassten Öffnung verfügt.

Mit anderen Worten ausgedrückt, der Überhang verbessert die Arretierung und elektrische Kontaktierung der Energiezelle, da die Länge bzw. die Fläche des Kontakts, d.h. die Kontakt- bzw. Haltefläche, mit der Energiezelle vergrößert wird.

Mit anderen Worten ausgedrückt, in einer Ausführungsform der vorliegenden Erfindung, wird die Platte in dem Kontaktierungsverfahren über die zylindrische Mantelfläche der Zelle geführt und dort fixiert.

In einer Ausführungsform der vorliegenden Erfindung kann dieses Kontaktieren an der zylindrischen Mantelfläche im selben oberen Bereich der Zelle vorgenommen werden, welcher auch einen stirnseitigen Deckelkontakt aufweist. Dies ermöglicht vorteilhaft, dass dann der untere Bereich der Zelle keine elektrische Kontaktierung oder eine mechanische Befestigungsverbindung benötigt, der gesamte Bauraum steht für die Kühlung bereit, d.h. die Zelle kann von einer Halbseite komplett mit einem Kühlmittel umströmt werden.

Die Fixierung erfolgt beispielsweise mittels form- und kraftschlüssigen Verbindungsverfahren. Dies kann ein Verpressverfahren sein, welches den Überhang form- und kraftschlüssig auf die Mantelfläche der Energiezelle prägt.

Kleb-, Löt- oder Schweißverfahren sind jedoch zu präferieren, da diese Verfahren eine stoffschlüssige Verbindung ermöglichen, welche selbst die Dichtigkeit gegenüber flüssigen Medien - etwa ein Kühlmedium - erreicht.

In einer Ausführungsform der vorliegenden Erfindung wird die Mantelfläche der Zelle und die untere - beispielsweise die dem Kühlmittel zugewandte - Seite der Kontaktplatte im Anschluss an die Fixierung mit einer Beschichtung versehen, welche die elektrische Leitfähigkeit unterbindet, gleichzeitig die exponierten Materialien gegen Korrosion schützt.

Die Kontaktierung des - beispielsweise negativen - ersten Pols der zylindrischen Energiezelle über die Mantelfläche im oberen Bereich der Zylinderform über eine dichte bzw. mechanische Verbindung - das heißt kraft- und formschlüssig, vorteilhaft stoffschlüssig - ermöglicht den Verzicht einer weiteren Abdichtung der darunterliegenden Mantelfläche gegen leitfähige Medien.

In einer Ausführungsform der vorliegenden Erfindung wird die Energiezelle mit den Kontaktierungen oben und der unteren, vorteilhaft frei zugänglichen Mantelfläche nach unten in einen Behälter gegeben, welcher ein thermisch leitfähiges Medium enthält.

Die thermische Kontaktfläche der Energiezelle ist durch diese Lösung bzw. durch diese Kontaktanordnung sehr groß, beispielsweise über 80% des Bauraums sind für das Kühlmittel frei zugänglich, gleichzeitig muss keine weitere Dichtung zur Isolation von positivem und negativem Kontakt mehr eingebracht werden.

In einer Ausführungsform der vorliegenden Erfindung wird eine einseitige Kontaktierung beider Batteriepole bereitgestellt. Mit anderen Worten, nur maximal eine Halbseite der Batteriezelle wird für die elektrische Kontaktierung und die mechanische Fixierung verwendet. Daraus resultiert eine immense Kühlmöglichkeit, da die nicht genutzte Halbseite komplett umströmt werden kann.

In einer Ausführungsform der vorliegenden Erfindung wird eine dichte, kraft- und formschlüssige oder materialschlüssige Verbindung rund um die zylindrische Mantelfläche bereitgestellt, um die Kontaktierung und Arretierung der Batteriezelle von der Kühlung zu trennen und einen Durchtritt von beispielsweise Kühlmittel in den Bereich der elektrischen Kontaktierung zu verhindern.

Mit anderen Worten ausgedrückt, eine mechanische Verbindung wird zwischen der Kontaktplatte und der Mantelfläche der Energiezelle für den gesamten Vollkreis der kreisförmigen Berührungsfläche zwischen der Energiezelle und der Kontaktplatte bereitgestellt.

In einer Ausführungsform der vorliegenden Erfindung wird eine an die Energiezelle angepassten Öffnung in einer Kontaktplatte erzeugt, z.B. durch Ausstanzen.

In einer Ausführungsform der vorliegenden Erfindung wird ein Überhang bereitgestellt, welcher beispielsweise in Richtung des positiven Pols über die Kontaktplatte hinaussteht und die kraftschlüssige oder stoffschlüssige Kontaktierung beispielsweise mittels Laserschweißen ermöglicht ohne die Energiezelle zu beschädigen.

In einer Ausführungsform der vorliegenden Erfindung wird die Abdichtung der beiden Batteriekontakte gegen das Kühlmedium durch eine formschlüssige und/oder stoffschlüssige Kontaktierung gewährleistet.

Vorteilhafte Ausgestaltungen der vorliegenden Erfindung sind in den Unteransprüchen gekennzeichnet.

In einer vorteilhaften Ausführungsform der vorliegenden Erfindung ist vorgesehen, dass die Ausnehmung und der Überhang dazu ausgebildet sind, die Energiezelle mit der Kontaktplatte über die Mantelfläche der Energiezelle formschlüssig und/oder kraftschlüssig und/oder materialschlüssig rund um die Mantelfläche zu fixieren. Dabei kann die Kühlung der Batteriezelle vorteilhaft an der gegenüberliegenden Seite wie die Arretierung und die Kontaktierung erfolgen.

In einer weiteren vorteilhaften Ausführungsform der vorliegenden Erfindung ist vorgesehen, dass die Ausnehmung und/oder der Überhang dazu ausgebildet sind, die Energiezelle formschlüssig und kraftschlüssig durch ein Verpressverfahren zu fixieren. Dies ermöglicht vorteilhaft, eine günstige Produktion der Batteriezellenhaltevorrichtung vorzunehmen.

In einer weiteren vorteilhaften Ausführungsform der vorliegenden Erfindung ist vorgesehen, dass die Ausnehmung und/oder der Überhang dazu ausgebildet sind, die Energiezelle materialschlüssig durch ein Kleb-, ein Löt- oder ein Schweißverfahren zu fixieren. Dies ermöglicht vorteilhaft, eine dichte, stoffschlüssige Verbindung bereitzustellen und eine Trennung von Bereichen für die Kühlung und Bereichen für die Kontaktierung und die Arretierung zu erreichen.

In einer weiteren vorteilhaften Ausführungsform der vorliegenden Erfindung ist vorgesehen, dass die Ausnehmung und der Überhang dazu ausgebildet sind, die Mantelfläche der Energiezelle innerhalb eines Halbseitenbereichs der Energiezelle zu kontaktieren und innerhalb des Halbseitenbereiches ferner einen Kontakt an der Stirnseite der Energiezelle auszuführen. Mit anderen Worten ausgedrückt, die Kontaktierung der Energiezelle kann innerhalb eines - d.h. ein und desselben - Halbseitenbereichs der Energiezelle vorgenommen werden.

In einer weiteren vorteilhaften Ausführungsform der vorliegenden Erfindung ist vorgesehen, dass die Kontaktplatte ferner eine Isolationsschicht aufweist, welche dazu ausgebildet ist, die Energiezellenhaltevorrichtung gegen Korrosion zu schützen.

In einer weiteren vorteilhaften Ausführungsform der vorliegenden Erfindung ist vorgesehen, dass die Energiezelle beispielsweise eine zylindrische Form oder eine Rundzellenform aufweist.

In einer weiteren vorteilhaften Ausführungsform der vorliegenden Erfindung ist vorgesehen, dass eine Mantelfläche der Energiezelle dazu ausgebildet ist, mit einer Kontaktplatte der Energiezellenhaltevorrichtung formschlüssig und/oder kraftschlüssig und/oder materialschlüssig fixiert zu werden.

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsformen beschriebenen Merkmale der vorliegenden Erfindung.

Die beiliegenden Zeichnungen sollen ein weiteres Verständnis der Ausführungsformen der vorliegenden Erfindung vermitteln. Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

### Kurze Beschreibung der Figuren

Es zeigen:
- Fig. 1: eine schematische Darstellung einer Batteriezellenkontaktierung zur Erläuterung der vorliegenden Erfindung;
- Fig. 2: eine schematische Darstellung einer Energiezellenhaltevorrichtung mit einer Batteriezellenkontaktierung gemäß einem Ausführungsbeispiel der vorliegenden Erfindung;
- Fig. 3: eine schematische Darstellung einer Energiezellenhaltevorrichtung mit einer Batteriezellenkontaktierung gemäß einem Ausführungsbeispiel der vorliegenden Erfindung;
- Fig. 4: eine schematische Darstellung einer Kontaktplatte der Energiezellenhaltevorrichtung gemäß einem Ausführungsbeispiel der vorliegenden Erfindung.

### Detaillierte Beschreibung von Ausführungsbeispielen

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

Bei dem Fahrzeug handelt es sich beispielsweise um ein Kraftfahrzeug oder ein Hybridkraftfahrzeug, wie ein Auto, einen Bus oder einen Lastkraftwagen oder aber auch um ein Schienenfahrzeug, ein Schiff, oder ein Luftfahrzeug, wie Helikopter oder Flugzeug, oder ein Kleinkraftrad, ein Roller, ein Motorrad, ein Pedelec bzw. ein Elektrofahrrad oder ein eBike handeln.

Auch für stationäre Energiespeicher kann die Energiezellenhaltevorrichtung gemäß einem Ausführungsbeispiel der vorliegenden Erfindung eingesetzt werden.

Der Begriff "Überhang", wie von der vorliegenden Erfindung verwendet, umfasst ein Hinzufügen von Material, beispielsweise eine Ausprägung oder eine Auswölbung. Der Überhang kann auch beispielsweise beim Ausstanzen der Ausnehmung in der Kontaktplatte "übrig bleiben", bzw. durch den Stanzvorgang ausgeprägt werden.

Der Begriff "Energiezelle" oder "Batteriezelle", wie von der vorliegenden Erfindung verwendet, umfasst einen Energiespeicher für elektrische Energie, insbesondere umfasst der Begriff elektrochemische Energiespeicher, welche in Primär- und Sekundärzellen unterschieden werden können.

Der Begriff "Mantelfläche", wie von der vorliegenden Erfindung verwendet, umfasst beispielsweise eine Fläche bzw. einen Flächenstreifen auf der Außenseite der Energiezelle, welche beispielsweise eine zylindrische Form oder eine Rundzellenform aufweist.

Der Begriff "Stirnseite", wie von der vorliegenden Erfindung verwendet, umfasst beispielsweise eine Grundfläche der zylindrischen Form der Energiezelle.

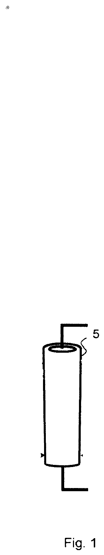

Die Fig. 1 zeigt eine schematische Darstellung einer Batteriezellenkontaktierung zur Erläuterung der vorliegenden Erfindung.

Die Batteriezelle 5 bzw. Energiezelle 5 wird beispielsweise per Deckel- und Bodenkontaktierung von oben und unten an den beiden Stirnseiten bzw. Grundflächen der Rundzelle kontaktiert.

An den per Pfeil aufgezeigten Stellen oder Flächen der dargestellten Energiezelle 5 kann eine seitliche Fixierung bzw. eine mechanische Arretierung an der Mantelfläche der Energiezelle 5 erfolgen.

Zylindrische Batterie-Zellen - beispielhaft Lithium-Ionen-Batterien - werden typischerweise am positiven Pol (Kathode) der Oberseite und am negativen Pol (Anode) der Unterseite der Zellen kontaktiert - Deckel und Boden des Zylinders dienen als Kontakte.

Die elektrische Kontaktierung an Deckel und Boden der zylindrischen Energiezelle ist durch die begrenzte Haltekraft nicht ausreichend, um die Zelle dauerhaft in Position zu halten, insbesondere für mobile Anwendungen.

Hier sind weitere seitliche Fixierungen der Zelle nötig, wie in Figur 1 dargestellt. Zudem ist die thermische Kontaktierung auf diese Weise u.U. nicht ausreichend für stark belastete Batterien.

Um die Abwärme der Zellen abzuleiten, kann ein thermischer Kontakt beispielsweise über die seitlichen Wände des Zylinders der Rundzelle hergestellt werden.

Sollte die Zelle in ein Kühlmedium eingebracht werden, welches in der Regel elektrisch leitfähig ist, so müssen die Deckel- und Bodenkontakte durch Dichtungen von dem Medium abgedichtet werden. Dies stellt einen hohen Aufwand dar.

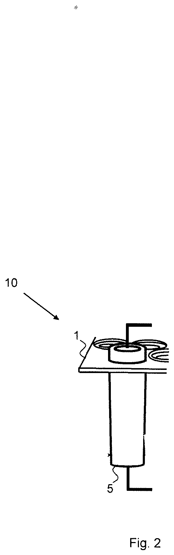

Die Figur 2 zeigt eine schematische Darstellung einer Energiezellenhaltevorrichtung mit einer Batteriezellenkontaktierung gemäß einem Ausführungsbeispiel der vorliegenden Erfindung.

Eine Deckelkontaktierung der Batteriezelle bzw. der Energiezelle 5 erfolgt beispielweise wie dargestellt von oben, wobei an der Stirnseite der Energiezelle 5 beispielsweise der Pluspol der Batterie, wie in der Zeichnung angedeutet angebracht ist.

Eine Kontaktierung über den Außenmantel der Energiezelle 5 erfolgt mit Hilfe der Kontaktplatte 1, welche mindestens eine Ausnehmung 4-n und mindestens einen Überhang 2-n aufweist, wobei n die Nummer der Energiezellen 5 in der Kontaktplatte 1 angibt.

Entsprechend kann die Kontaktplatte 1 eine Mehrzahl an Ausnehmungen 4-n und an Überhängen 2-n aufweisen.

Durch die Kontaktierung der Mantelfläche der Energiezelle 5 wird beispielhaft der Minuspol der Energiezelle 5 elektrisch verbunden.

Die Energiezellenhaltevorrichtung 10 ermöglicht vorteilhaft eine elektrische Kontaktierung von Batteriezellen bei gleichzeitiger, d.h. direkter, Kühlung der Zellmantelflächen mit Kühlmittel ohne Verwendung von Gummidichtungen oder ähnlichen komplexen Ausprägungen mit kritischen Toleranzen.

Die Kontaktplatte 1 der Energiezellenhaltevorrichtung 10 ermöglicht mehrere Energiezellen 5 zu einem Modul, im Einzelfall auch "Pack" genannt, elektrisch zu verbinden.

Die Energiezellenhaltevorrichtung 10 ermöglicht einen Blockaufbau und einen modularen Aufbau der Energiezellen 5 zu bewerkstelligen.

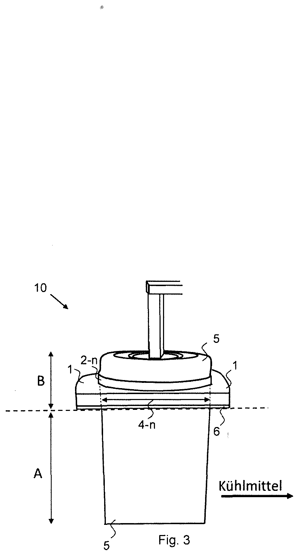

Die Figur 3 zeigt eine schematische Darstellung einer Energiezellenhaltevorrichtung mit einer Batteriezellenkontaktierung gemäß einem Ausführungsbeispiel der vorliegenden Erfindung.

Die Kontaktplatte 1 hat mindestens einen Überhang 2-n, welcher die Kontakt- oder Verbindungsfläche mit der Mantelfläche der Energiezelle 5 vergrößert und dadurch die mechanische Arretierung der Energiezelle 5 in der Energiezellenhaltevorrichtung 10 und/oder die elektrische Kontaktierung der Energiezelle 5 mit der Kontaktplatte 1 verbessert.

Die Energiezelle 5 kann in einen ersten bzw. in einen oberen Halbseitenbereich B und einen zweiten bzw. einen unteren Halbseitenbereich A unterteilt werden.

Dabei kann die Unterteilung der Halbseitenbereiche A, B in einem beliebigen Verhältnis vorgenommen werden. Vorteilhaft ist der Halbseitenbereich A größer, da dies die Kühlleistung des Kühlsystems vergrößert. Dies ermöglicht vorteilhaft, beispielsweise durch den im Betrieb der Energiezellen 5 bedingten Temperaturwechsel durch eine verbesserte Kühlung zu minimieren oder auch bei ungünstigen klimatischen Umgebungstemperaturen die Energiezellen 5 in einem vorgegebenen Temperaturbereich zu halten.

Die elektrische Kontaktierung der Energiezelle 5 erfolgt zum einen durch die stirnseitig vorgesehene Deckelkontaktierung im Halbseitenbereich B und zum anderen ebenfalls im Halbseitenbereich B durch die Kontaktierung der Energiezelle 5 über die Mantelfläche, wobei ein elektrischer Kontakt auf der Mantelfläche der Energiezelle 5 mit der Kontaktplatte 1 und mit dem jeweiligen Überhang 2-n verbunden ist.

Im Halbseitenbereich A der Energiezelle 5 kann Kühlmittel - per Pfeil angedeutet - die Energiezelle 5 umströmen und für eine entsprechende Kühlung oder Temperierung der Energiezelle 5 Sorge tragen.

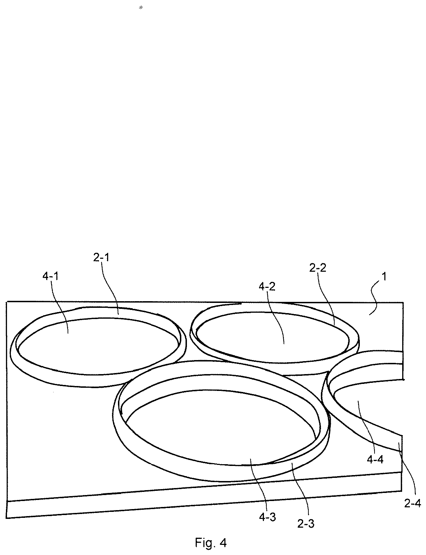

Die Figur 4 zeigt eine schematische Darstellung einer Kontaktplatte der Energiezellenhaltevorrichtung gemäß einem Ausführungsbeispiel der vorliegenden Erfindung.

Die Kontaktplatte 1 umfasst eine Mehrzahl n an Ausnehmungen 4-n und an Überhängen 2-n. Ein Überhang kann als eine Ausprägung oder eine Auswölbung vorgesehen sein und dient dazu, die Verbindungsfläche mit der Mantelfläche der Energiezelle 5 zu vergrößern.

Die Kontaktplatte 1, wie in der Fig. 4, dargestellt umfasst dabei vier Ausnehmungen 4-1, 4-2, 4-3, 4-4 und vier Überhänge 2-1, 2-2, 2-3, 2-4.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Zellmodulaufbau für ein Kraftfahrzeug,
wobei der Zellmodulaufbau mindestens eine Energiezelle (5) und eine Energiezellenhaltevorrichtung (10)
aufweist, wobei die Energiezellenhaltevorrichtung (10) umfasst:
- eine Kontaktplatte (1), welche mindestens eine Ausnehmung (4-n) und mindestens einen Überhang (2-n) aufweist;
- wobei die Ausnehmung (4-n) und der Überhang (2-n) die Energiezelle (5) mit der Kontaktplatte (1) über eine Mantelfläche der Energiezelle (5) formschlüssig und/oder kraftschlüssig und/oder materialschlüssig fixieren; und wobei
die Ausnehmung (4-n) und der Überhang (2-n) dazu ausgebildet sind, einen elektrischen Anschluss der Energiezelle (5) über die Mantelfläche der Energiezelle (5) zu kontaktieren, wobei
die Energiezelle (5) als einen ersten elektrischen Kontakt einen Kontakt an einer Stirnseite der Energiezelle (5) aufweist und als einen zweiten elektrischen Kontakt einen Kontakt an einer Mantelfläche aufweist, wobei der zweite elektrische Kontakt innerhalb eines Halbseitenbereichs (B) angeordnet ist und innerhalb des Halbseitenbereiches (B) ferner der erste elektrische Kontakt angeordnet ist.

2. Zellmodulaufbau nach Anspruch 1,
wobei die Ausnehmung (4-n) und der Überhang (2-n) dazu ausgebildet sind, die Energiezelle (5) mit der Kontaktplatte (1) über die Mantelfläche der Energiezelle (5) formschlüssig und/oder kraftschlüssig und/oder materialschlüssig rund um die Mantelfläche zu fixieren.

3. Zellmodulaufbau nach Anspruch 2,
wobei die Ausnehmung (4-n) und/oder der Überhang (2-n) dazu ausgebildet sind, die Energiezelle (5) formschlüssig und kraftschlüssig durch ein Verpressverfahren zu fixieren.

4. Zellmodulaufbau nach Anspruch 2,
wobei die Ausnehmung (4-n) und/oder der Überhang (2-n) dazu ausgebildet sind, die Energiezelle (5) materialschlüssig durch ein Kleb-, Löt- oder ein Schweißverfahren zu fixieren.

5. Zellmodulaufbau nach einem der vorhergehenden Ansprüche, wobei die Ausnehmung (4-n) und der Überhang (2-n) dazu ausgebildet sind, die Mantelfläche der Energiezelle (5) innerhalb eines Halbseitenbereichs (B) der Energiezelle (5) zu kontaktieren und innerhalb des Halbseitenbereiches (B) ferner einen Kontakt an der Stirnseite der Energiezelle (5) auszuführen.

6. Zellmodulaufbau nach einem der vorhergehenden Ansprüche, wobei die Kontaktplatte (1) ferner eine Isolationsschicht (6) aufweist, welche dazu ausgebildet ist, die Energiezellenhaltevorrichtung (10) gegen Korrosion zu schützen.

7. Zellmodulaufbau nach einem der vorhergehenden Ansprüche, wobei die Energiezelle (5) eine zylindrische Form oder eine Rundzellenform aufweist.

8. Zellmodulaufbau nach einem der vorhergehenden Ansprüche, wobei eine Mantelfläche der Energiezelle (5) dazu ausgebildet ist, mit einer Kontaktplatte (1) der Energiezellenhaltevorrichtung formschlüssig und/oder kraftschlüssig und/oder materialschlüssig fixiert zu werden.

## Claims

1. Cell module structure for a motor vehicle,
wherein the cell module structure has at least one energy cell (5) and an energy cell holding device (10), wherein the energy cell holding device (10) comprises:
- a contact plate (1) which has at least one cutout (4-n) and at least one overhang (2-n);
- wherein the cutout (4-n) and the overhang (2-n) fix the energy cell (5) to the contact plate (1) via a casing surface of the energy cell (5) by form fit and/or force fit and/or substance bonding; and wherein
the cutout (4-n) and the overhang (2-n) are designed to contact an electrical terminal of the energy cell (5) via the casing surface of the energy cell (5), wherein
the energy cell (5) comprises a contact on an end face of the energy cell (5) as a first electrical contact and a contact on a casing surface as a second electrical contact, wherein the second electrical contact is arranged inside a half-side region (B), and furthermore the first electrical contact is arranged inside the half-side region (B).

2. Cell module structure according to Claim 1, wherein the cutout (4-n) and the overhang (2-n) are designed to fix the energy cell (5) to the contact plate (1) via the casing surface of the energy cell (5) by form fit and/or force fit and/or substance bonding all around the casing surface.

3. Cell module structure according to Claim 2, wherein the cutout (4-n) and/or the overhang (2-n) are designed to fix the energy cell (5) by form fit and force fit in a press-fit process.

4. Cell module structure according to Claim 2, wherein the cutout (4-n) and/or the overhang (2-n) are designed to fix the energy cell (5) by substance bonding in a gluing, soldering or welding process.

5. Cell module structure according to one of the preceding claims,
wherein the cutout (4-n) and the overhang (2-n) are designed to contact the casing surface of the energy cell (5) inside a half-side region (B) of the energy cell (5) and furthermore to make a contact on the end face of the energy cell (5) inside the half-side region (B).

6. Cell module structure according to one of the preceding claims,
wherein the contact plate (1) furthermore comprises an isolating layer (6) which is designed to protect the energy cell holding device (10) against corrosion.

7. Cell module structure according to one of the preceding claims, wherein the energy cell (5) has a cylindrical form or a round cell form.

8. Cell module structure according to one of the preceding claims, wherein a casing surface of the energy cell (5) is designed to be fixed to a contact plate (1) of the energy cell holding device by form fit and/or force fit and/or substance bonding.

## Revendications

1. Structure de module de cellule destinée à un véhicule automobile,
la structure de module de cellule comportant au moins une cellule d'énergie (5) et un dispositif de support de cellule d'énergie (10), le dispositif de support de cellule d'énergie (10) comprenant :
- une plaque de contact (1) qui comporte au moins un évidement (4-n) et au moins une saillie (2-n) ;
- l'évidement (4-n) et la saillie (2-n) fixant la cellule d'énergie (5) à la plaque de contact (1) sur une surface d'enveloppe de la cellule d'énergie {5) par une liaison par complémentarité de formes et/ou une liaison en force et/ou une liaison de matière ; et l'évidement (4-n) et la saillie (2-n) étant conçus pour venir en contact avec une connexion électrique de la cellule d'énergie (5) par le biais de la surface d'enveloppe de la cellule d'énergie (5),
la cellule d'énergie (5) comportant un contact sur un côté frontal de la cellule d'énergie (5) comme premier contact électrique et un contact sur une surface d'enveloppe comme deuxième contact électrique, le deuxième contact électrique étant disposé à l'intérieur d'une zone de demi-côté (B) et le premier contact électrique étant également disposé à l'intérieur de la zone de demi-côté (B).

2. Structure de module de cellule selon la revendication 1,
l'évidement (4-n) et la saillie (2-n) étant conçus pour fixer la cellule d'énergie (5) à la plaque de contact (1) sur la surface d'enveloppe de la cellule d'énergie (5) tout autour de la surface d'enveloppe par une liaison par complémentarité de formes et/ou une liaison en force et/ou une liaison de matière.

3. Structure de module de cellule selon la revendication 2,
l'évidement (4-n) et/ou la saillie (2-n) étant conçus pour fixer la cellule d'énergie (5) par une liaison par complémentarité de formes et/ou une liaison en force par un procédé de pressage.

4. Structure de module de cellule selon la revendication 2,
l'évidement (4-n) et/ou la saillie (2-n) étant conçus pour fixer la cellule d'énergie (5) par une liaison de matière par un procédé de collage, de brasage ou de soudage.

5. Structure de module de cellule selon l'une des revendications précédentes, l'évidement (4-n) et la saillie (2-n) étant conçus pour venir en contact avec la surface d'enveloppe de la cellule d'énergie (5) à l'intérieur d'une zone de demi-côté (B) de la cellule d'énergie (5) et pour effectuer également un contact sur le côté frontal de la cellule d'énergie (5) à l'intérieur d'une zone de demi-côté (B).

6. Structure de module de cellule selon l'une des revendications précédentes, la plaque de contact (1) comportant en outre une couche isolante (6) qui est destinée à protéger le dispositif de support de cellule d'énergie (10) contre la corrosion.

7. Structure de module de cellule selon l'une des revendications précédentes, la cellule d'énergie (5) ayant une forme cylindrique ou une forme de cellule ronde.

8. Structure de module de cellule selon l'une des revendications précédentes, une surface d'enveloppe de la cellule d'énergie (5) étant destinée à être fixée à une plaque de contact (1) du dispositif de support de cellule d'énergie par une liaison par complémentarité de formes et/ou une liaison en force et/ou une liaison de matière.
